# EUROPÄISCHE PATENTANMELDUNG

(11) **EP 4 230 832 A2**
(43) Veröffentlichungstag der Anmeldung: **23.08.2023**
(21) Anmeldenummer: 22210179.2
(22) Anmeldetag: 29.11.2022
(51) Int. Cl.: E06B 9/24, G02F 1/163

(54) **VERFAHREN UND ANORDNUNG ZUM STEUERN EINER SONNENEINSTRAHLUNG IN EIN GEBÄUDE**

(71) Anmelder: Siemens Schweiz AG, 8047 Zürich (CH)
(72) Erfinder: Ludwig, Christoph Ernst, 81673 München (DE); Mayer, Hermann Georg, 83209 Prien am Chiemsee (DE)
(74) Vertreter: Siemens Patent Attorneys

(57) **Zusammenfassung**

Zum Steuern einer Sonneneinstrahlung in ein Gebäude (G) werden anhand eines digitalen Gebäudemodells (BIM) Lichteintrittsflächen (LE1-LE4) mit jeweils individuell einstellbarer Transparenz lokalisiert. Weiterhin werden räumliche Positionen von im Gebäude befindlichen, vor Sonneneinstrahlung zu schützenden Personen (U) oder Objekten (PC) als Schutzbereiche ermittelt. Darüber hinaus wird eine aktuelle Sonneneinstrahlung ermittelt, und es wird ein jeweiliger räumlicher Strahlenverlauf (SV) der aktuellen Sonneneinstrahlung auf die ermittelten Schutzbereiche anhand des Gebäudemodells (BIM) simuliert. Für einen jeweiligen simulierten Strahlenverlauf wird (SV) eine jeweilige Lichteintrittsfläche (LE2) ermittelt, die von diesem Strahlenverlauf (SV) durchquert wird. Schließlich wird die Transparenz der jeweils durchquerten Lichteintrittsfläche (LE2) individuell verringert.

## Beschreibung

Starke Sonneneinstrahlung durch Fenster eines Gebäudes kann einen negativen Einfluss auf das Wohlbefinden von Personen in geschlossenen Räumen oder auf lichtempfindliche Objekte haben. Zur Reduzierung eines zu starken Lichteinfalls oder zu starker Wärmeeinstrahlung werden typischerweise die betreffenden Fenster abgedunkelt. Dies kann beispielsweise durch manuelles oder automatisches Schließen von Jalousien oder durch Verdunklung von Fensterscheiben erfolgen.

Zur nicht-mechanischen Verdunkelung von Fensterscheiben kann insbesondere sogenanntes intelligentes Glas verwendet werden, das häufig auch als "Smart Glass" bezeichnet wird. Derartiges intelligentes Glas kann insbesondere mittels elektrochromer, photochromer oder thermochromer Materialen realisiert werden, deren Transparenz sich abhängig von einer angelegten Spannung, eines Lichteinfalls bzw. einer Temperatur verändert.

Die obigen Verdunkelungstechniken erweisen sich jedoch häufig als nicht sehr flexibel. So ist in vielen Fällen zu beobachten, dass nach einer Verdunkelung von Fensterscheiben eine elektrische Beleuchtung zusätzlich eingeschaltet wird.

Es ist Aufgabe der vorliegenden Erfindung, ein Verfahren und eine Anordnung anzugeben, mit denen sich die Sonneneinstrahlung in einem Gebäude flexibler und/oder bedarfsgerechter steuern lässt.

Gelöst wird diese Aufgabe durch ein Verfahren mit den Merkmalen des Patentanspruchs 1, durch eine Anordnung mit den Merkmalen des Patentanspruchs 9, durch ein Computerprogrammprodukt mit den Merkmalen des Patentanspruchs 10 sowie durch ein computerlesbares Speichermedium mit den Merkmalen des Patentanspruchs 11.

Zum Steuern einer Sonneneinstrahlung in ein Gebäude werden anhand eines digitalen Gebäudemodells des Gebäudes Lichteintrittsflächen mit jeweils individuell einstellbarer Transparenz lokalisiert. Das Gebäude kann insbesondere ein öffentliches oder privates Gebäude, ein Wohngebäude, ein Bürogebäude, ein Schulgebäude, ein Museum, ein Ausstellungsraum, ein Fabrikgebäude oder ein Gewächshaus sein. Unter dem Begriff Gebäude sei insbesondere auch ein einzelner Raum oder eine einzelne Halle eines umgebenden Gebäudes verstanden. Die Lichteintrittsflächen können an Fenstern des Gebäudes angeordnet sein oder z.B. an einer Glaswand im Inneren des Gebäudes. Weiterhin werden räumliche Positionen von im Gebäude befindlichen, vor Sonneneinstrahlung zu schützenden Personen oder Objekten als Schutzbereiche ermittelt. Darüber hinaus wird eine aktuelle Sonneneinstrahlung ermittelt, und es wird ein jeweiliger räumlicher Strahlenverlauf der aktuellen Sonneneinstrahlung auf die ermittelten Schutzbereiche anhand des Gebäudemodells simuliert. Für einen jeweiligen simulierten Strahlenverlauf wird eine jeweilige Lichteintrittsfläche ermittelt, die von diesem Strahlenverlauf durchquert wird. Schließlich wird die Transparenz der jeweils durchquerten Lichteintrittsfläche individuell verringert.

Zum Ausführen des erfindungsgemäßen Verfahrens sind eine Anordnung zum Steuern einer Sonneneinstrahlung in ein Gebäude, ein Computerprogrammprodukt sowie ein computerlesbares, vorzugsweise nichtflüchtiges Speichermedium vorgesehen.

Das erfindungsgemäße Verfahren sowie die erfindungsgemäße Anordnung können beispielsweise mittels eines oder mehrerer Computer, Prozessoren, anwendungsspezifischer integrierter Schaltungen (ASIC), digitaler Signalprozessoren (DSP) und/der sogenannter "Field Programmable Gate Arrays" (FPGA) ausgeführt bzw. implementiert werden. Darüber hinaus kann das erfindungsgemäße Verfahren zumindest teilweise in einer Cloud und/oder in einer Edge-Computing-Umgebung ausgeführt werden.

Ein wesentlicher Vorteil der Erfindung ist insbesondere darin zu sehen, dass es einen zielgenauen, selektiven bzw. lokalisierten Schutz vor Sonneneinstrahlung erlaubt. Indem spezifisch die Transparenz derjenigen Lichteintrittsflächen individuell verringert wird, durch die die Schutzbereiche beleuchtet werden, wird ein Lichteinfall in anderen Teilen des Gebäudes oft nur wenig beeinträchtigt. Auf diese Weise kann Energie für eine zusätzliche künstliche Beleuchtung in vielen Fällen eingespart werden. Außerdem wirkt natürliches Tageslicht oft positiv auf die menschliche Psyche.

Darüber hinaus kann eine Steuerung des Lichteinfalls automatisch einem im Tagesverlauf oder Jahresverlauf veränderlichen Sonnenstand nachgeführt werden.

Vorteilhafte Ausführungsformen und Weiterbildungen der Erfindung sind in den abhängigen Ansprüchen angegeben.

Nach einer vorteilhaften Ausführungsform der Erfindung kann die Transparenz einer jeweiligen Lichteintrittsfläche durch Anlegen und/oder Variieren einer elektrischen Spannung eingestellt werden. Insbesondere können die Lichteintrittsflächen mit einem elektrochromen Material versehen sein, dessen Transparenz sich durch das Anlegen der elektrischen Spannung einstellen lässt. Vorzugsweise können Folien mit elektrochromem Material vorgesehen sein, die auf verschiedene Teile eines Fensters oder einer Glaswand des Gebäudes aufgeklebt werden. Mittels derartiger Folien kann die Erfindung auf besonders einfache Weise bei bestehenden Gebäuden implementiert werden.

Nach einer weiteren vorteilhaften Ausführungsform der Erfindung kann ein aktueller Sonnenstand sensorisch und/oder anhand einer Zeitangabe ermittelt werden. Hierbei kann insbesondere eine Richtung des Sonnenstandes ermittelt werden. Die Zeitangabe kann eine Datumsangabe und eine Uhrzeit umfassen, aus denen der aktuelle Sonnenstand mit wohlbekannten Verfahren berechnet oder tabellarisch ermittelt wird. Die aktuelle Sonneneinstrahlung kann dann anhand des aktuellen Sonnenstands und anhand des Gebäudemodells ermittelt werden. Die aktuelle Sonneneinstrahlung kann dabei durch Angaben über ihre Richtung relativ zum Gebäude und ggf. Angaben über ihre Intensität dargestellt werden.

Weiterhin kann ein Lichteinfall in das Gebäude durch einen optischen Sensor gemessen werden. Die aktuelle Sonneneinstrahlung kann dann anhand des gemessenen Lichteinfalls ermittelt werden. Insbesondere kann ein optischer Sensor in einem Schutzbereich angeordnet sein und so einen auf diesen Schutzbereich auftreffenden Strahlenverlauf detektieren.

Nach einer weiteren vorteilhaften Ausführungsform der Erfindung kann im Gebäudemodell ein Aufenthaltsbereich einer Person oder ein Ort eines Objekts hinterlegt werden. Der hinterlegte Aufenthaltsbereich oder Ort kann dann als Schutzbereich ermittelt werden. Hierdurch können insbesondere statische und/oder vorbekannte Schutzbereiche auf einfache Weise aus dem Gebäudemodell ausgelesen und/oder zu einer Initialisierung der Simulation verwendet werden. Auf diese Weise können z.B. feste Arbeitsplätze und insbesondere dort befindliche Personen, speziell deren Kopf- oder Augenbereich, Schreibtische, darauf angeordnete Displays oder Monitore, lichtempfindliche Materialien, Ausstellungsstücke, Flüssigkeiten, Behälter oder Reaktoren als fixe Schutzbereiche hinterlegt werden.

Alternativ oder zusätzlich kann ein aktueller Ort einer Person oder eines Objekts im Gebäude mittels einer Kamera, eines Funketiketts, eines Headsets, einer Datenbrille, einer Smartwatch und/oder mittels Sensoren eines Building-Management-Systems des Gebäudes erfasst werden. Insbesondere kann die Person oder das Objekt mittels eines sogenannten Ultra-Breitband-Systems (UWB), z.B. auf Basis des omlox-Standards, lokalisiert werden. Der erfasste Ort kann dann als Schutzbereich ermittelt werden. Auf diese Weise können auch sich bewegende Personen oder Objekte dynamisch erfasst und/oder verfolgt und die entsprechenden Schutzbereiche dynamisch nachgeführt werden.

Gemäß einer vorteilhaften Weiterbildung der Erfindung kann eine Sichtlinie zwischen einer ersten Person oder einem ersten Objekt und einer zweiten Person oder einem zweiten Objekt ermittelt werden. Damit kann eine von der ermittelten Sichtlinie durchquerte Lichteintrittsfläche ermittelt werden, und die Transparenz der durchquerten Lichteintrittsfläche kann spezifisch verringert werden. Auf diese Weise kann ein gezielter Sichtschutz zwischen der ersten Person oder dem ersten Objekt und der zweiten Person oder dem zweiten Objekt realisiert werden. Die beteiligten Personen oder Objekte können dabei insbesondere wie vorstehend beschrieben lokalisiert werden. Die Sichtlinie kann dann anhand des Gebäudemodells analog zum räumlichen Strahlenverlauf der Sonneneinstrahlung simulativ ermittelt werden.

Nach einer weiteren vorteilhaften Weiterbildung der Erfindung kann ein im Gebäude befindliches Leuchtmittel ein oder mehrere Lichtaustrittsflächen aufweisen, deren Transparenz individuell einstellbar ist. Das Leuchtmittel kann dann durch individuelle Ansteuerung der Lichtaustrittsflächen richtungsabhängig gedimmt werden. Durch Überlagerung mehrerer Schichten derartiger Lichtaustrittflächen kann eine entsprechende Wirkung auch in ihrer Intensität stark variiert werden. Auf diese Weise kann eine Ausleuchtung in einer Umgebung des Leuchtmittels besonders flexibel eingestellt werden.

Ein Ausführungsbeispiel der Erfindung wird nachfolgend anhand der Zeichnung näher erläutert. Dabei veranschaulichen jeweils in schematischer Darstellung:
- Figur 1:: eine erfindungsgemäße Anordnung zum Steuern einer Sonneneinstrahlung in ein Gebäude,
- Figur 2:: die erfindungsgemäße Anordnung bei verändertem Sonnenstand,
- Figur 3:: die erfindungsgemäße Anordnung mit implementiertem Sichtschutz und
- Figur 4:: Leuchtmittel mit individuell verdunkelbaren Lichtaustrittsflächen.

Insofern in verschiedenen Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

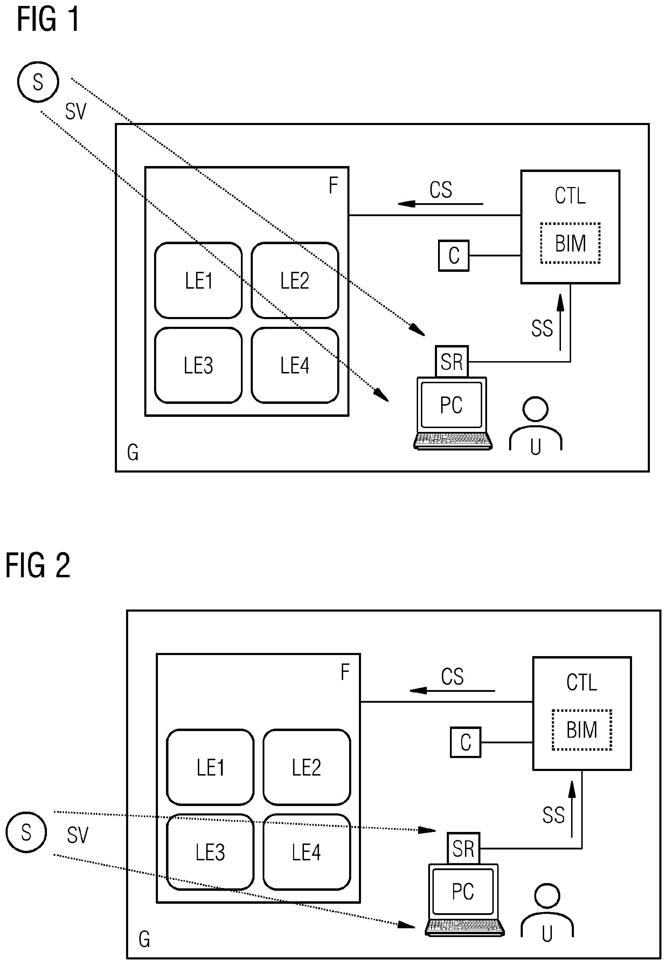

Figur 1 veranschaulicht eine erfindungsgemäße Anordnung zum Steuern einer Sonneneinstrahlung in ein Gebäude G. Das Gebäude G kann insbesondere ein öffentliches oder privates Gebäude, ein Wohngebäude, ein Bürogebäude, ein Schulgebäude, ein Museum, ein Ausstellungsraum, ein Fabrikgebäude oder ein Gewächshaus sein. Unter dem Begriff Gebäude sei insbesondere auch ein einzelner Raum oder eine einzelne Halle eines umgebenden Gebäudes verstanden.

Für das vorliegende Ausführungsbeispiel sei angenommen, dass das Gebäude G ein Raum eines Bürogebäudes ist.

Der Raum G verfügt über ein Fenster F, durch das die Sonne S scheint. Weitere Fenster des Raumes G sind in den Figuren aus Gründen der Übersichtlichkeit nicht explizit dargestellt.

Auf das Fenster F sind mehrere elektrochrome Folien aufgeklebt, die individuell ansteuerbare Lichteintrittsflächen LE1-LE4 für das eintretende Sonnenlicht bilden. Die elektrochromen Folien LE1-LE4 können jeweils individuell durch Anlegen und/oder Variieren einer elektrischen Spannung verdunkelt und/oder getrübt werden, wodurch sich eine Transparenz oder Durchlässigkeit der Lichteintrittsflächen LE1-LE4 individuell einstellen lässt. Die Transparenz der Lichteintrittsflächen LE1-LE4 kann somit über das Fenster F variieren. Insbesondere muss eine Verdunkelung einer der Lichteitrittsflächen LE1-LE4 nicht zwangsläufig das gesamte Fenster F verdunkeln.

Die elektrochromen Folien LE1-LE4 werden vorzugsweise in Form von Feldern, horizontalen oder vertikalen Streifen oder in Form von anderen, einem tages- und/oder jahreszeitlichen Sonnenverlauf angepassten Geometrien auf das Fenster F aufgeklebt. Im vorliegenden Ausführungsbeispiel sind die elektrochromen Folien LE1-LE4 als im Wesentlichen rechteckige Felder ausgestaltet.

Die elektrochromen Folien LE1-LE4 sind an eine Steuereinrichtung CTL des Gebäudes G angeschlossen. Die Steuereinrichtung CTL weist einen oder mehrere Prozessoren zum Ausführen von Verfahrensschritten der Erfindung sowie einen oder mehrere Speicher zum Speichern von zu verarbeitenden Daten auf.

Die Steuereinrichtung CTL ist vorzugsweise Teil eines sogenannten Building-Management-Systems oder an ein solches angeschlossen. Derartige Building-Management-Systeme verfügen in der Regel über eine Vielzahl von Sensoren, mit denen oft auch Positionen von beweglichen Objekten und/oder Personen, ein aktueller Sonnenstand, eine Intensität einer Sonneneinstrahlung oder andere Zustands- oder Umgebungsparameter eines Gebäudes erfasst werden können. Ein solches Building-Management-System wird zuweilen auch als Building-Performance-Twin (BPT) bezeichnet.

Darüber hinaus verfügt die Steuereinrichtung CTL über ein digitales Gebäudemodell BIM des Raumes R, das vorzugsweise als sogenanntes BIM-Modell (BIM: Building Information Model) ausgestaltet ist.

Das digitale Gebäudemodell BIM umfasst ein dreidimensionales Modell des Raumes R und spezifiziert insbesondere dessen Innenraum, dessen umgebende Wände sowie spezifisch das Fenster F mit seinen Lichteintrittsflächen LE1-LE4 hinsichtlich ihrer individuellen Positionen, Orientierungen und Abmessungen in maschinenlesbarer Form. Darüber hinaus sind im Gebäudemodell BIM jeweils eine räumliche Position eines oder mehrerer vor direkter Sonneneinstrahlung zu schützender Arbeitsplätze als statischer Schutzbereich hinterlegt.

Für das vorliegende Ausführungsbeispiel sei angenommen, dass sich an einem solchen Arbeitsplatz ein von einem Benutzer U zu bedienender Einzelplatzrechner PC befindet. Im Bereich des Bildschirms des Rechners PC ist ein optischer Sensor SR angeordnet. Letzterer ist an die Steuereinrichtung CTL angeschlossen.

Zum Schutz dieses Arbeitsplatzes vor direkter Sonneneinstrahlung wird durch den optischen Sensor SR fortlaufend eine Intensität eines Lichteinfalls gemessen. Die gemessene Intensität wird in Form eines Sensorsignals SS fortlaufend vom optischen Sensor SR zur Steuereinrichtung CTL übermittelt. Durch die Steuereinrichtung CTL wird die gemessene Intensität fortlaufend mit einem vorgegebenen Schwellwert verglichen und bei dessen Überschreitung eine Simulation eines Strahlenverlaufs SV einer einfallenden Sonnenstrahlung veranlasst.

Für diese Simulation wird durch die Steuereinrichtung CTL ein aktueller Sonnenstand der Sonne S beispielsweise anhand eines aktuellen Datums und einer aktuellen Tageszeit oder anhand von Sensoren eines Building-Management-Systems ermittelt. Der aktuelle Sonnenstand kann hierbei insbesondere durch eine Richtungsangabe relativ zum Raum R quantifiziert werden.

Weiterhin werden durch die Steuereinrichtung CTL anhand des Gebäudemodells BIM die Lichteintrittsflächen LE1-LE4 sowie der als Schutzbereich hinterlegte Arbeitsplatz des Benutzers U für die Simulation räumlich lokalisiert und in eine geometrische Beziehung mit dem aktuellen Sonnenstand gesetzt. Auf diese Weise kann eine aktuelle Sonneneinstrahlung in den Raum R nach den bekannten Prinzipien der geometrischen Optik simulativ ermittelt werden. Insbesondere wird hierbei durch die Steuereinrichtung CTL derjenige räumliche Strahlenverlauf SV simuliert und ermittelt, der von der Sonne S zum Arbeitsplatz des Benutzers U führt. Dieser Strahlenverlauf SV ist in Figur 1 durch punktierte Pfeile angedeutet.

Für den zum Arbeitsplatz des Benutzers U führenden Strahlenverlauf SV werden dann durch die Steuereinrichtung CTL diejenige oder diejenigen der Lichteintrittsflächen LE1-LE4 ermittelt, die von diesem Strahlenverlauf SV hauptsächlich oder vorwiegend durchquert werden.

Im vorliegenden Ausführungsbeispiel wird bei dem in Figur 1 dargestellten Sonnenstand hauptsächlich die Lichteintrittsfläche LE2 durch den ermittelten Strahlenverlauf SV durchquert. Entsprechend wird durch die Steuereinrichtung CTL ein Steuersignal CS zur Lichteintrittsfläche LE2 übermittelt, durch das diese Lichteintrittsfläche LE2 individuell abgedunkelt wird. Die anderen Lichteintrittsflächen LE1, LE3 und LE4 werden dagegen nicht abgedunkelt.

Figur 2 veranschaulicht die erfindungsgemäße Anordnung bei einem gegenüber Figur 1 tieferen Sonnenstand. Gemäß diesem Sonnenstand führt ein entsprechend simulierter Strahlenverlauf SV nicht mehr durch die Lichteintrittsfläche LE2, sondern stattdessen durch die Lichteintrittsflächen LE3 und LE4. Dementsprechend wird durch die Steuereinrichtung CTL ein Steuersignal CS zu den Lichteintrittsflächen LE3 und LE4 übermittelt, durch das diese Lichteintrittsflächen LE3 und LE4 individuell abgedunkelt werden. Die anderen Lichteintrittsflächen LE1 und LE2 werden dagegen nicht bzw. nicht mehr abgedunkelt.

Indem nur die Transparenz derjenigen Lichteintrittsflächen, hier LE2 bzw. LE3 und LE4, individuell verringert wird, durch die Schutzbereiche beleuchtet werden, wird ein Lichteinfall in anderen Teilen des Raumes R oft nur wenig beeinträchtigt.

Auf diese Weise kann Energie für eine zusätzliche künstliche Beleuchtung in vielen Fällen eingespart werden. Darüber hinaus kann die Steuerung des Lichteinfalls dem Sonnenstand im Tages- oder Jahresverlauf automatisch nachgeführt werden.

Neben statischen, im Gebäudemodell BIM hinterlegten Schutzbereichen können durch die Steuereinrichtung CTL auch dynamische Schutzbereiche ermittelt werden. Zu diesem Zweck ist an die Steuereinrichtung CTL eine Kamera C angeschlossen, mittels der aktuelle Orte von beweglichen, vor direkter Sonneneinstrahlung zu schützenden Objekten oder Personen als Schutzbereiche erfasst werden. Die dynamischen Schutzbereiche können dann analog zu den statischen Schutzbereichen - wie oben beschrieben - vor direkter Sonneneinstrahlung geschützt werden.

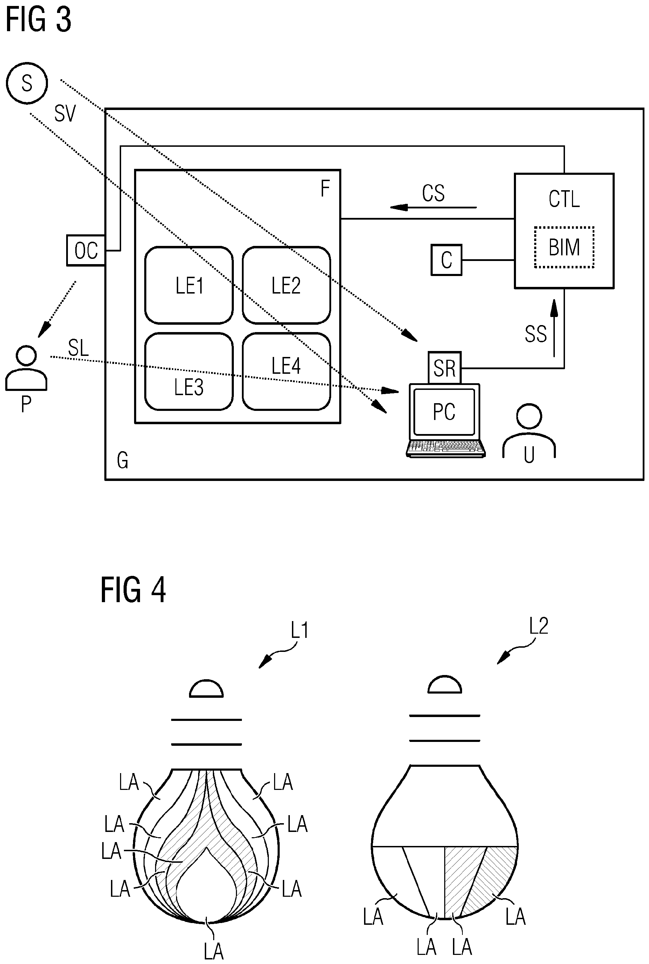

Figur 3 veranschaulicht die erfindungsgemäße Anordnung mit einem zusätzlich implementierten Sichtschutz. Im vorliegenden Ausführungsbeispiel soll insbesondere der Rechner PC des Benutzers U gegen Einsichtnahme von außerhalb des Raumes R geschützt werden.

Zu diesem Zweck ist an die Steuereinrichtung CTL eine Außenkamera OC angeschlossen, mittels der aktuelle Orte von außerhalb des Raumes R befindlichen Personen oder Objekten fortlaufend erfasst werden. Im vorliegenden Ausführungsbeispiel wird auf diese Weise ein Passant P erfasst und relativ zum Raum R lokalisiert. Mit Hilfe des Gebäudemodells BIM wird dann durch die Steuereinrichtung CTL eine Sichtlinie SL zwischen dem Passanten P und dem Rechner PC des Benutzers U ermittelt. Anschließend werden diejenige oder diejenigen der Lichteintrittsflächen LE1-LE4 ermittelt, die von dieser Sichtlinie SL durchquert werden. Im vorliegenden Ausführungsbeispiel sind dies die Lichteintrittsflächen LE3 und LE4. Entsprechend werden diese Lichteintrittsflächen LE3 und LE4 durch die Steuereinrichtung CTL selektiv und individuell abgedunkelt. Bei Bewegung des Passanten P werden die Sichtlinie SL sowie die abzudunkelnden Lichteintrittsflächen entsprechend nachgeführt.

Figur 4 veranschaulicht verschiedene Leuchtmittel L1 und L2, z.B. LED-Leuchtmittel, mit individuell verdunkelbaren Lichtaustrittsflächen LA. Die Leuchtmittel L1 und L2 unterscheiden sich in Form und Anordnung der Lichtaustrittsflächen LA.

Durch die individuell ansteuerbaren Lichtaustrittsflächen LA können die Leuchtmittel L1 und L2 richtungsabhängig gedimmt und/oder satiniert werden. Auf diese Weise kann eine Ausleuchtung von Arbeitsplätzen oder anderen Teilen des Raumes R besonders flexibel eingestellt und auch dynamisch verändert werden.

## Patentansprüche

1. Computerimplementiertes Verfahren zum Steuern einer Sonneneinstrahlung in ein Gebäude (G), wobei
a) anhand eines digitalen Gebäudemodells (BIM) des Gebäudes (G) Lichteintrittsflächen (LE1-LE4) mit jeweils individuell einstellbarer Transparenz lokalisiert werden,
b) räumliche Positionen von im Gebäude (G) befindlichen, vor Sonneneinstrahlung zu schützenden Personen (U) oder Objekten (PC) als Schutzbereiche ermittelt werden,
c) eine aktuelle Sonneneinstrahlung ermittelt wird,
d) ein jeweiliger räumlicher Strahlenverlauf (SV) der aktuellen Sonneneinstrahlung auf die ermittelten Schutzbereiche anhand des Gebäudemodells (BIM) simuliert wird,
e) für einen jeweiligen simulierten Strahlenverlauf (SV) eine jeweilige Lichteintrittsfläche (LE2) ermittelt wird, die von diesem Strahlenverlauf (SV) durchquert wird, und
f) die Transparenz der jeweils durchquerten Lichteintrittsfläche (LE2) individuell verringert wird.

2. Verfahren nach Anspruch 1, **dadurch gekennzeichnet,**
**dass** die Transparenz einer jeweiligen Lichteintrittsfläche (LE2) durch Anlegen und/oder Variieren einer elektrischen Spannung eingestellt wird.

3. Verfahren nach einem der vorhergehenden Ansprüche, **dadurch gekennzeichnet,**
**dass** ein aktueller Sonnenstand sensorisch und/oder anhand einer Zeitangabe ermittelt wird, und
**dass** die aktuelle Sonneneinstrahlung anhand des aktuellen Sonnenstands und anhand des Gebäudemodells (BIM) ermittelt wird.

4. Verfahren nach einem der vorhergehenden Ansprüche, **dadurch gekennzeichnet,**
**dass** ein Lichteinfall in das Gebäude (G) durch einen optischen Sensor (SR) gemessen wird, und
**dass** die aktuelle Sonneneinstrahlung anhand des gemessenen Lichteinfalls ermittelt wird.

5. Verfahren nach einem der vorhergehenden Ansprüche, **dadurch gekennzeichnet,**
**dass** im Gebäudemodell (BIM) ein Aufenthaltsbereich einer Person (U) oder ein Ort eines Objekts (PC) hinterlegt wird, und dass der hinterlegte Aufenthaltsbereich oder Ort als Schutzbereich ermittelt wird.

6. Verfahren nach einem der vorhergehenden Ansprüche, **dadurch gekennzeichnet,**
**dass** ein aktueller Ort einer Person (U) oder eines Objekts (PC) im Gebäude (G) mittels einer Kamera (C), eines Funketiketts, eines Headsets, einer Datenbrille, einer Smartwatch und/oder mittels Sensoren eines Building-Management-Systems des Gebäudes (G) erfasst wird, und
**dass** der erfasste Ort als Schutzbereich ermittelt wird.

7. Verfahren nach einem der vorhergehenden Ansprüche, **dadurch gekennzeichnet,**
**dass** eine Sichtlinie (SL) zwischen einer ersten Person (P) oder einem ersten Objekt und einer zweiten Person (U) oder einem zweiten Objekt (PC) ermittelt wird,
**dass** eine von der ermittelten Sichtlinie (SL) durchquerte Lichteintrittsfläche (LE3, LE4) ermittelt wird, und
**dass** die Transparenz der durchquerten Lichteintrittsfläche (LE3, LE4) spezifisch verringert wird.

8. Verfahren nach einem der vorhergehenden Ansprüche, **dadurch gekennzeichnet,**
**dass** ein im Gebäude (G) befindliches Leuchtmittel (L1, L2) ein oder mehrere Lichtaustrittsflächen (LA) aufweist, deren Transparenz individuell einstellbar ist, und
**dass** das Leuchtmittel (L1, L2) durch individuelle Ansteuerung der Lichtaustrittsflächen (LA) richtungsabhängig gedimmt wird.

9. Anordnung zum Steuern einer Sonneneinstrahlung in ein Gebäude (G), mit Mitteln zum Ausführen der Schritte eines Verfahrens nach einem der vorhergehenden Ansprüche.

10. Computerprogrammprodukt, umfassend Befehle, die bei der Ausführung des Programms durch einen Computer diesen veranlassen, ein Verfahren nach einem der Ansprüche 1 bis 8 auszuführen.

11. Computerlesbares Speichermedium mit einem Computerprogrammprodukt nach Anspruch 10.
